# EUROPEAN PATENT SPECIFICATION

(11) **EP 2 116 133 B1**
(45) Date of publication and mention of the grant of the patent: **18.09.2013**
(21) Application number: 08704191.9
(22) Date of filing: 30.01.2008
(51) Int. Cl.: A01N 37/44, A01G 7/06, A01N 37/46, A01P 21/00

(54) **USE OF AN AGENT FOR IMPROVING ALPHA ACID CONTENT OR HOP OIL CONTENT IN HOP**
VERWENDUNG EINES MITTELS FÜR DIE VERBESSERUNG DES ALPHA-SÄUREGEHALTS ODER HOPFENÖLGEHALTS BEI HOPFEN
UTILISATION D`UN AGENT D'AMÉLIORATION DE LA TENEUR EN ACIDE ALPHA OU DE LA TENEUR EN ESSENCE DE HOUBLON DANS DU HOUBLON

(30) Priority: 02.02.2007 JP 2007023790
(43) Date of publication of application: 11.11.2009
(73) Proprietor: Cosmo Oil Co., Ltd., Tokyo 105-8528 (JP)
(72) Inventor: TANAKA, Tohru, Tokyo 106-6018 (JP); KAWATA, Satofumi, Tokyo 106-6018 (JP)
(74) Representative: HOFFMANN EITLE
(86) International application number: PCT/JP2008/051428
(87) International publication number: WO 2008/093740

(56) References cited:
- EP-A1- 0 514 776
- JP-A- 04 338 305
- JP-A- 07 053 487
- THOMAS G G ET AL: "Late applications of hormone mixtures to increase the yield of seedles hops (Humulus lupulus L.)", JOURNAL OF HORTICULTURAL SCIENCE, HEADLEY BROS. LTD., INVICTA PRESS, ASHFORD, GB, vol. 51, no. 4, 1 January 1976 (1976-01-01), pages 515-523, XP009165416, ISSN: 0022-1589
- ROYLE L ET AL: "Analysis of hop acids by capillary electrophoresis", FOOD CHEMISTRY, ELSEVIER LTD, NL, vol. 74, no. 2, 1 August 2001 (2001-08-01) , pages 225-231, XP027374866, ISSN: 0308-8146 [retrieved on 2001-08-01]

## Description

### Technical Field

The present invention relates to an agent which increases the content of an alpha acid or a hop oil contained in a hop.

### Background Art

It is generally known that a hop is added as a spice of beer. The purposes thereof are to impart aromatic incense characteristic of beer and a refreshing bitter taste and to improve lasting foam of beer. Such an action is attributed to the function of lupulin that is an active ingredient of a hop. Particularly, an alpha acid, which is one ingredient of lupulin, undertakes a function of imparting the refreshing bitter taste.

On the other hand, hop oils in lupulin undertake a function of imparting aromatic incense. Among the hop oils, for example, myrcene strongly influences the aromatic incense. Moreover, in actual beer, oxidized aroma of essential oils remains. The oxidized aroma also influences the aromatic incense. Specifically, it is understood that an oxidized product of myrcene imparts citrus fragrance and an oxidized product of humulene imparts floral fragrance.

Therefore, in order to produce beers having unique characteristics in various countries and regions and according to consumers' preferences, the hop to be used is desirably a hop containing ingredients rich in diversity. In particular, the contents of alpha acids and hop oils are particularly carefully watched indices and hence it is desired to adjust the contents of alpha acids and hop oils.

A series of 5-aminolevulinic acids such as 5-aminolevulinic acid represented by NH₂CH₂CO(CH₂)₂COOH, derivatives of its alkyl esters and the like, and hydrochlorides thereof are known to be useful as a plant growth regulator (Patent Document 1), a herbicide (Patent Document 2), a plant oligosaccharide-increasing agent (Patent Document 3), and the like. However, a hop alpha acid or hop oil content-enhancing effect thereof is entirely not known.
Patent Document 1: JP-A-07-53487
Patent Document 2: JP-A-05-117110
Patent Document 3: JP-A-09-87108

### Disclosure of the Invention

### Problems that the Invention is to Solve

An object of the invention is to provide a hop alpha acid or hop oil content enhancer, which increases the content of an alpha acid or a hop oil in a hop.

### Means for Solving the Problems

As a result of extensive studies, the present inventors have found that the content of an alpha acid or a hop oil in a hop is enhanced by the use of 5-aminolevulinic acid or a derivative thereof in a plant and thus they have accomplished the invention.

Namely, the invention has the following constitutions.
1. A use of 5-aminolevulinic acid or a derivative thereof represented by the following formula (1), or a salt thereof for enhancing the content of an alpha acid or a hop oil in a hop:

R²R¹NCH₂COCH₂CH₂COR³ (1)

wherein R¹ and R² each independently represents a hydrogen atom, an alkyl group, an acyl group, an alkoxycarbonyl group, an aryl group, or an aralkyl group; R³ represents a hydroxyl group, an alkoxy group, an acyloxy group, an alkoxycarbonyloxy group, an aryloxy group, an aralkyloxy group, or an amino group.
Preferred embodiments of the invention are subject of the dependent claims.

### Advantage of the Invention

The use according to the invention can increase the content of a hop alpha acid or a hop oil conveniently and effectively and thus can improve an added value of a hop.

### Best Mode for Carrying Out the Invention

The alkyl group represented by R¹ and R² in the formula (1) is preferably a linear or branched alkyl group having 1 to 24 carbon atoms, more preferably an alkyl group having 1 to 18 carbon atoms, and particularly, an alkyl group having 1 to 6 carbon atoms is preferred.
As the alkyl group having 1 to 6 carbon atoms, there may be mentioned a methyl group, an ethyl group, an n-propyl group, an isopropyl group, an n-butyl group, a sec-butyl group, and the like.

As the acyl group represented by R¹ and R², a linear or branched alkanoyl group having 1 to 24 carbon atoms, preferably 1 to 12 carbon atoms, alkenylcarbonyl group, aroyl group, or aryloxycarbonyl group is preferred, and particularly, an alkanoyl group having 1 to 6 carbon atoms is preferred. As the acyl group, there may be mentioned a formyl group, an acetyl group, an n-propanoyl group, an n-butanoyl group, an n-pentanoyl group, an n-hexanoyl group, an n-nonanoyl group, a benzyloxycarbonyl group, and the like.

As the alkoxycarbonyl group represented by R¹ and R², an alkoxycarbonyl group having 2 to 13 carbon atoms in total is preferred, and particularly, an alkoxycarbonyl group having 2 to 7 carbon atoms is preferred. As the alkoxycarbonyl group, there may be mentioned a methoxycarbonyl group, an ethoxycarbonyl group, an n-propoxycarbonyl group, an isopropoxycarbonyl group, and the like.

As the aryl group represented by R¹ and R², an aryl group having 6 to 16 carbon atoms is preferred and there may be, for example, mentioned a phenyl group, a naphthyl group, and the like.

As the aralkyl group represented by R¹ and R², a group composed of an aryl group having 6 to 16 carbon atoms and the above alkyl group having 1 to 6 carbon atoms is preferred and there may be, for example, mentioned a benzyl group and the like.

The alkoxy group represented by R³ is preferably a linear or branched alkoxy group having 1 to 24 carbon atoms, more preferably an alkoxy group having 1 to 16 carbon atoms, and particularly, an alkoxy group having 1 to 12 carbon atoms is preferred. As the alkoxy group, there may be mentioned a methoxy group, an ethoxy group, an n-propoxy group, an isopropoxy group, an n-butoxy group, a pentyloxy group, a hexyloxy group, an octyloxy group, a decyloxy group, a dodecyloxy group, and the like.

As the acyloxy group represented by R³, a linear or branched alkanoyloxy group having 1 to 12 carbon atoms is preferred, and particularly, an alkanoyloxy group having 1 to 6 carbon atoms is preferred. As the acyloxy group, there may be mentioned an acetoxy group, a propionyloxy group, a butyryloxy group, and the like.

As the alkoxycarbonyloxy group represented by R³, an alkoxycarbonyloxy group having 2 to 13 carbon atoms in total is preferred, and particularly, an alkoxycarbonyloxy group having 2 to 7 carbon atoms in total is preferred. As the alkoxycarbonyloxy group, there may be mentioned a methoxycarbonyloxy group, an ethoxycarbonyloxy group, an n-propoxycarbonyloxy group, an isopropoxycarbonyloxy group, and the like.

As the aryloxy group represented by R³, an aryloxy group having 6 to 16 carbon atoms is preferred, and there may be, for example, mentioned a phenoxy group, a naphthyloxy group, and the like. As the aralkyloxy group, one having the above aralkyl group is preferred, and there may be, for example, mentioned a benzyloxy group and the like.

As R¹ and R² in the formula (1), a hydrogen atom is preferred. As R³, a hydroxyl group, an alkoxy group, or an aralkyloxy group is preferred, and more preferably, a hydroxyl group or an alkoxy group having 1 to 12 carbon atoms, particularly 1 to 6 carbon atoms, in particular, a methoxy group or a hexyloxy group is preferred.

As more preferred 5-aminolevulinic acid derivatives, there may be mentioned 5-aminolevulinic acid methyl ester, 5-aminolevulinic acid ethyl ester, 5-aminolevulinic acid propyl ester, 5-aminolevulinic acid butyl ester, 5-aminolevulinic acid pentyl ester, 5-aminolevulinic acid hexyl ester, and the like. Particularly, 5-aminolevulinic acid methyl ester or 5-aminolevulinic acid hexyl ester is preferred.

As the salt of 5-aminolevulinic acid or the derivative thereof, there may be, for example, mentioned acid addition salts such as hydrochlorides, hydrobromides, hydroiodides, phosphates, methyl phosphates, ethyl phosphates, phosphites, hypophosphites, nitrates, sulfates, acetates, propionates, toluenesulfonates, succinates, oxalates, lactates, tartrates, glycolates, methanesulfonates, butyrates, valerates, citrates, fumarates, maleates, and malates; metal salts such as sodium salts, potassium salts, and calcium salts; ammonium salts, alkyl ammonium salts, and the like.
These salts are used as aqueous solutions or powders at their use.

The above 5-aminolevulinic acid, a derivative thereof, and a salt thereof (hereinafter sometimes referred to as "5-aminolevulinic acid or the like") may form hydrates or solvates. Moreover, any of them may be used singly or two or more thereof may be suitably used in combination.

The 5-aminolevulinic acid or the like to be used in the invention can be produced by any method of chemical synthesis, production by a microorganism, and production by an enzyme. Specifically, it can be produced in accordance with the methods described in JP-A-48-92328, JP-A-62-111954, JP-A-2-76841, JP-A-6-172281, JP-A-7-188133, JP-A-11-42083, and the like. The 5-aminolevulinic acid or the like and a chemical reaction solution or fermentation liquid thereof before purification, which are produced as above, can be used as they are without separation and purification unless they contain harmful substance(s). Moreover, a commercial product or the like can be also used.

As shown in the following Examples, by applying 5-aminolevulinic acid or a derivative thereof to a hop, the content of an alpha acid or a hop oil contained in the hop is increased. Therefore, 5-aminolevulinic acid or a derivative thereof can be used as a hop alpha acid or hop oil content enhancer. The action of such 5-aminolevulinic acid or the like is entirely not expected and the invention is useful for improving an added value of a hop.

The content enhancer of the invention is suitably used as a content enhancer of not only an alpha acid or a hop oil but also a beta acid.

The hop to be a target for the use of 5-aminolevulinic acid or a derivative thereof according to the invention is not particularly limited. In general, it is said that a variety having a high alpha acid content is not sufficient in hop oils and a variety rich in hop oils has a low alpha acid content. Therefore, the invention is useful for all hops without limitation to the kind of hops. Herein, the hop oils include myrcene or pharnesene.

As a form of the 5-aminolevulinic acid or a derivative thereof for use in the invention, there may be mentioned a powder, a tablet, a granule, or the like.
They can be produced suitably using a solvent, a dispersion medium, a filler, an excipient, and/or the like in accordance with a usual method.

The 5-aminolevulinic acid or a derivative thereof for use as a hop alpha acid or hop oil content enhancer according to the invention may be also used after a powder of 5-aminolevulinic acid or a derivative thereof, an aqueous solution containing 5-aminolevulinic acid or a derivative thereof dissolved in water, or a fermentation liquid containing 5-aminolevulinic acid or a derivative thereof produced by the aforementioned method is adsorbed on a support such as an excipient. The kind of the support may be a common one and there may be mentioned crystalline cellulose, gelatin, starch, dextrin, an oil cake, baker's yeast, beer yeast, sake yeast, wine yeast, powdered skim milk, lactose, animal or vegetable oil and fat, anhydrous calcium phosphate, calcium carbonate, magnesium stearate, magnesium aluminosilicate, magnesium aluminometasilicate, and the like.

In the case of preparing the 5-aminolevulinic acid or derivative thereof for use as the hop alpha acid or hop oil content enhancer according to the invention as an aqueous solution, in order to prevent decomposition of 5-aminolevulinic acid or derivative thereof as an active ingredient, it is necessary to pay attention so that the aqueous solution does not become alkaline. In the case where the aqueous solution becomes alkaline, the decomposition of the active ingredient can be prevented by removing dissolved oxygen.

5-Aminolevulinic acid or a derivative thereof is used as it is or a plant growth regulator, a sugar, an amino acid, an organic acid, an alcohol, a vitamin, a mineral, and/or the like can be mixed unless the advantage of the invention is impaired.

As the plant growth regulator to be used herein, there may be, for example, mentioned brassinolides such as epibrassinolide, choline agents such as choline chloride and choline nitrate, indolebutyric acid, indoleacetic acid, ethychlozate agent, 1-naphthylacetamide agent, isoprothiolane agent, nicotinic acid amide agent, hydroxyisoxazole agent, calcium peroxide agent, benzylaminopurine agent, methasulfocarb agent, oxyethylene docosanol agent, ethephon agent, chlochinphonac agent, gibberellines, daminozide agent, 4-CPA agent, ancymidol agent, inabenfide agent, uniconazole agent, chlormequat agent, dikeblack agent, mefluidide agent, calcium carbonate agent, piperonyl butoxide agent, and the like.

As the sugar, there may be, for example, mentioned glucose, sucrose, xylitol, sorbitol, galactose, xylose, mannose, arabinose, madurose, ribose, rhamnose, fructose, maltose, lactose, maltotriose, and the like.

As the amino acid, there may be, for example, mentioned asparagine, glutamine, histidine, tyrosine, glycine, arginine, alanine, tryptophan, methionine, valine, proline, leucine, lysine, isoleucine, and the like.

As the organic acid, there may be, for example, mentioned formic acid, acetic acid, propionic acid, butyric acid, valeric acid, oxalic acid, phthalic acid, benzoic acid, lactic acid, citric acid, tartaric acid, malonic acid, malic acid, succinic acid, glycolic acid, glutamic acid, aspartic acid, maleic acid, caproic acid, caprylic acid, myristic acid, stearic acid, palmitic acid, pyruvic acid, α-ketoglutaric acid, and the like.

As the alcohol, there may be, for example, mentioned methanol, ethanol, propanol, butanol, pentanol, hexanol, glycerol, and the like.

As the vitamin, there may be, for example, mentioned nicotinic acid amide, vitamin B₆, vitamin B₁₂, vitamin B₅, vitamin C, vitamin B₁₃, vitamin B₁, vitamin B₃, vitamin B₂, vitamin K₃, vitamin A, vitamin D₂, vitamin D₃, vitamin K₁, α-tocopherol, β-tocopherol, γ-tocopherol, σ-tocopherol, p-hydroxybenzoic acid, biotin, folic acid, nicotinic acid, pantothenic acid, α-lipoic acid, and the like.

As the mineral, there may be, for example, mentioned nitrogen, phosphorus, potassium, sodium, calcium, boron, nickel, selenium, manganese, magnesium, zinc, copper, iron, molybdenum, and the like.

The application of the 5-aminolevulinic acid or derivative thereof for use as the hop alpha acid or hop oil content enhancer according to the invention to a hop is not particularly limited but the enhancer can be to be absorbed from roots, leaves, or stems. For example, the enhancer may be used for foliage treatment (a foliage-treating agent) or may be used for soil treatment (a soil-treating agent). Moreover, the agent may be absorbed before a plant is planted or a cutting is planted. Furthermore, the enhancer may be added into water at hydroponics. The amount of 5-aminolevulinic acid or the like to be applied at each time is preferably 0.001 to 1000 ppm, particularly preferably 0.01 to 500 ppm.

In the case where 5-aminolevulinic acid or a derivative thereof is used as a foliage-treating agent, it is preferred that 5-aminolevulinic acid or a derivative thereof is incorporated in the hop alpha acid or hop oil content enhancer in a concentration of 0.1 to 1000 ppm, preferably 0.5 to 500 ppm, particularly preferably 1 to 300 ppm and is used in a ratio of 10 to 1000 L, particularly 50 to 300 L per 10 are. Moreover, it is desirable to use a spreading agent in combination. The kind and amount of the spreading agent to be used is not particularly limited.

In the case where the 5-aminolevulinic acid or derivative thereof is used as a soil-treating agent in the present invention, it is preferred to use the 5-aminolevulinic acid or derivative thereof in a ratio of 1 to 1000 g, particularly 10 to 500 g per 10 are.

In the case where there is adopted a method of absorbing 5-aminolevulinic acid or a derivative thereof for use in the present invention by dipping before planting using the hop alpha acid or hop oil content enhancer, the concentration of 5-aminolevulinic acid or the like in the dipping solution is desirably 0.001 to 10 ppm, particularly 0.01 to 5 ppm and a dipping time is desirably 1 hour to 1 week, particularly 3 hours to 1 day.

The treating method with the 5-aminolevulinic acid or derivative thereof for use in the invention, particularly timing for use, growing conditions, and the like are not particularly limited. Moreover, a sufficient effect is obtained by treating a plant once but the effect can be further enhanced by treating the plant twice or more times. In this case, respective method described above can be combined.

### Examples

The following will specifically describe the invention with reference to Examples but they are cited only for illustration and do not limited the invention.

### Example 1

Seedlings of Zatecky poloskory cervenak cultivated by conventional method in Slovakia in 2006 were subjected to foliar treatment at timing shown in Table 1 with an aqueous 5-aminolevulinic acid (ALA) hydrochloride solution shown in Table 2. Table 3 shows the contents of an alpha acid, a beta acid, and hop oils in the case where the treatment was performed and in the case where the treatment was not performed.

**[Table 1]**

| Treating conditions | | | |
|---|---|---|---|
| | Treated date | State of seedling | Treating amount |
| 1st time | May 26 | Height of seedling, 1m | No treatment, 0.1%, 500 L/ha, 0.02%, 2500 L/ha |
| 2nd time | June 12 | Early stage of flowering | No treatment, 0.1 %, 500 L/ha, 0.02%, 2500 L/ha |
| 3rd time | June 26 | Peak stage of flowering | No treatment, 0.1%, 500 L/ha, 0.02%, 2500 L/ha |
| 4th time | July 10 | Later stage of flowering | No treatment, 0.1%, 500 L/ha, 0.02%, 2500 L/ha |
| 5th time | July 25 | After flowering | No treatment, 0.1%, 500 L/ha, 0.02%, 2500 L/ha |

**[Table 2]**

| Composition of stock solution of treating liquid of ALA | |
|---|---|
| 5-Aminolevulinic acid hydrochloride | 0.35% |
| Total amount of nitrogen | 9.5% |
| | (inclusive of nitrate-nitrogen of 3.8%) |
| Water-soluble magnesium | 3.8% |
| Water-soluble manganese | 0.30% |
| Water-soluble boron | 0.45% |

**[Table 3]**

| Test results | | | | | |
|---|---|---|---|---|---|
| Treatment | Alpha acid (%) (ratio to no treatment) | Beta acid (%) (ratio to no treatment) | Hop oil myrcene | Hop oil pharnesene | (Reference) Dry weight t/ha, % |
| No treatment | 2.57 (100) | 4.39 (100) | 34.7 (100) | 16.4 (100) | 1.40 (100) |
| 0.1%, 500 L/ha | 3.11 (121) | 4.95 (113) | 57.0 (164) | 17.6 (107) | 1.44 (103) |
| 0.02%, 2500 L/ha | 3.26 (127) | 4.62 (105) | 51.6 (149) | 19.9 (121) | 1.76 (125) |

As is apparent from Table 3, it is realized that the contents of an alpha acid, a beta acid, and hop oils are remarkably increased by the ALA treatment. The present variety is a type having a relatively low contents of an alpha acid and a beta acid but a high hop oil content but the hop oils are further enhanced and the alpha acid and the beta acid are also enhanced. It is known for ALA to have a yield-increasing effect and the dried weight is also increased as shown in Reference. However, the values in Table 3 are contents per weight and thus it is an effect unexpected from the existing information.

### Example 2

Seedlings of a high alpha acid type Marynka species cultivated by conventional method in Poland in 2006 were subjected to foliar treatment at timing shown in Table 4 with an aqueous ALA hydrochloride solution the same as in Example 1. Table 5 shows the contents of an alpha acid and a beta acid in the case where the treatment was performed and in the case where the treatment was not performed.

**[Table 4]**

| Treating conditions | | | | | | |
|---|---|---|---|---|---|---|
| | Treated date | No treatment | No treatment (basal fertilizer 30% up) | Treatment 1 | Treatment 1 (basal fertilizer 30% up) | Treatment 2 |
| 1st time | June 29 | No treatment | No treatment | 0.05%, 1000 L/ha | 0.05%, 1000 L/ha | 0.05%, 1000 L/ha |
| 2nd time | July 10 | No treatment | No treatment | 0.05%, 1000 Uha | 0.05%, 1000 L/ha | No treatment |
| 3rd time | July 19 | No treatment | No treatment | 0.05%, 1000 Uha | 0.05%, 1000 L/ha | 0.05%, 2000 L/ha |
| 4th time | July 28 | No treatment | No treatment | 0.05%, 1000 Uha | 0.05%, 1000 L/ha | No treatment, |
| 5th time | August 8 | No treatment | No treatment | 0.05%, 1000 Uha | 0.05%, 1000 L/ha | 0.05%, 3000 L/ha |
| 6th time | August 17 | No treatment | No treatment | 0.05%, 1000 Uha | 0.05%, 1000 L/ha | No treatment |

**[Table 5]**

| Test results | | | | | |
|---|---|---|---|---|---|
| | No treatment | No treatment (basal fertilizer 30% up) | Treatment 1 | Treatment 1 (basal fertilizer 30% up) | Treatment 2 |
| Alpha acid (%) (ratio to no treatment) | 6.68 (100) | 6.57 (98) | 6.82 (102) | 6.98 (104) | 6.95 (104) |
| (Reference) Yield (kg/ha) (ratio to no treatment %) | 1549 (100) | 1552 (100) | 1609 (104) | 1610 (104) | 1610 (104) |

As is apparent from Table 5, it is realized that the content of an alpha acid is remarkably increased by the ALA treatment. Although the present variety is a type having a high content of an alpha acid and is considered that it is difficult to categorically exhibit an effect, a sufficient effect is shown. It is known for ALA to have a yield-increasing effect and the dried weight is also increased as shown in Reference. However, the values in Table 5 are content per weight and thus it is an effect unexpected from the existing information.

### Industrial Applicability

According to the present invention, there can be provided a hop alpha acid or hop oil content enhancer, which increases the content of an alpha acid or a hop oil in a hop.

## Claims

1. A use of 5-aminolevulinic acid or a derivative thereof represented by the following formula (1), or a salt thereof for enhancing the content of an alpha acid or a hop oil in a hop:
R²R¹NCH₂COCH₂CH₂COR³ (1)
wherein R¹ and R² each independently represents a hydrogen atom, an alkyl group, an acyl group, an alkoxycarbonyl group, an aryl group, or an aralkyl group; R³ represents a hydroxyl group, an alkoxy group, an acyloxy group, an alkoxycarbonyloxy group, an acyloxy group, an aralkyloxy group, or an amino group.

2. The use according to claim 1, wherein the 5-aminolevulinic acid or derivative thereof further enhances beta acid content in the hop.

3. The use according to claim 1 or 2, wherein the hop oil is myrcene or pharnesene.

4. The use according to any one of claims 1 to 3, wherein the 5-aminolevulinic acid or derivative thereof is applied in a concentration of 0.001 to 1000 ppm per each time.

5. The use according to any one of claims 1 to 4, wherein the 5-aminolevulinic acid or derivative thereof is to be absorbed from leaves, stems, or roots of the hop.

## Patentansprüche

1. Verwendung von 5-Aminolevulinsäure oder einem Derivat davon, das durch die folgende Formel (1) dargestellt ist, oder eines Salzes davon, zum Erhöhen des Gehalts einer Alpha-Säure oder eines Hopfenöls in einem Hopfen:
R²R¹NCH₂COCH₂CH₂COR³ (1)
worin R¹ und R² jeweils unabhängig voneinander ein Wasserstoffatom, eine Alkylgruppe, eine Acylgruppe, eine Alkoxycarbonylgruppe, eine Arylgruppe oder eine Aralkylgruppe darstellen, R³ eine Hydroxylgruppe, eine Alkoxygruppe, eine Acyloxygruppe, eine Alkoxycarbonyloxygruppe, eine Aryloxygruppe, eine Aralkyloxygruppe oder eine Aminogruppe darstellt.

2. Verwendung gemäß Anspruch 1, worin die 5-Aminolevulinsäure oder das Derivat davon ferner den Beta-Säure-Gehalt in dem Hopfen verbessert.

3. Verwendung gemäß Anspruch 1 oder 2, worin das Hopfenöl Myrcen oder Pharnesen ist.

4. Verwendung gemäß einem der Anpsrüche 1 bis 3, worin die 5-Aminolevulinsäure oder das Derivat davon jeweils in einer Konzentration von 0,001 bis 1000 ppm angewendet wird.

5. Verwendung gemäß einem der Ansprüche 1 bis 4, worin die 5-Aminolevulinsäure oder das Derviat davon von Blättern, Stängeln oder Wurzeln des Hopfen aufgenommen werden soll.

## Revendications

1. Utilisation de l'acide 5-aminolévulinique ou d'un dérivé de celui-ci représenté par la formule suivante (1), ou d'un sel de celui-ci pour augmenter la teneur d'un acide alpha ou d'une huile de houblon dans un houblon :
R²R¹NCH₂COCH₂CH₂COR³ (1)
où R¹ et R² représentent chacun indépendamment un atome d'hydrogène, un groupe alkyle, un groupe acyle, un groupe alcoxycarbonyle, un groupe aryle, ou un groupe aralkyle ; R³ représente un groupe hydroxyle, un groupe alcoxy, un groupe acyloxy, un groupe alcoxycarbonyloxy, un groupe aryloxy, un groupe aralkyloxy, ou un groupe amino.

2. Utilisation selon la revendication 1, dans laquelle l'acide 5-aminolévulinique ou un dérivé de celui-ci augmente en outre la teneur en acide bêta dans le houblon.

3. Utilisation selon la revendication 1 ou 2, dans laquelle l'huile de houblon est myrcène ou pharnesène.

4. Utilisation selon l'une quelconque des revendications 1 à 3, dans laquelle l'acide 5-aminolévulinique ou un dérivé de celui-ci est appliqué en une concentration allant de 0,001 à 1000 ppm à chaque fois.

5. Utilisation selon l'une quelconque des revendications 1 à 4, dans laquelle l'acide 5-aminolévulinique ou un dérivé de celui-ci doit être absorbé à partir de feuilles, de tiges, ou de racines du houblon.
